# FASCICULE DE BREVET EUROPEEN

(11) **EP 2 548 710 B1**
(45) Date de publication et mention de la délivrance du brevet: **06.03.2019**
(21) Numéro de dépôt: 12176046.6
(22) Date de dépôt: 12.07.2012
(51) Int. Cl.: B29C 47/06, B29C 47/02, B29C 47/88, B29C 47/56, G02B 6/44, H01B 13/14

(54) **PROCÉDÉ DE FABRICATION D'UN MICRO-TUBE**
HERSTELLUNGSVERFAHREN EINES MIKROROHRS
METHOD FOR MANUFACTURING A MICROTUBE

(30) Priorité: 18.07.2011 FR 1156514
(43) Date de publication de la demande: 23.01.2013
(73) Titulaire: Wavin B.V., 8011 CW Zwolle (NL)
(72) Inventeur: Second Christian, 74270 Chene en Semine (FR); Rouger, Jérôme, 03270 Mariol (FR)
(74) Mandataire: Hoffmann Eitle

(56) Documents cités:
- EP-A1- 0 785 451
- EP-A2- 0 326 711
- WO-A1-02/099491
- CN-Y- 2 475 041
- CN-Y- 2 526 864
- US-A- 4 892 442
- US-A1- 2004 240 809
- US-B1- 6 500 365

## Description

La présente invention concerne un procédé de fabrication d'un micro-tube, contenant un câble tel qu'un câble en fibre optique.

On utilise des câbles dans de nombreux domaines de l'industrie. Généralement, ces câbles sont recouverts d'un isolant et disposés dans des tubes de protection formant des gaines.

En particulier, on utilise de plus en plus des micro-tubes, c'est-à-dire des tubes dont le diamètre est inférieur à 20 mm, notamment dans des applications liées aux réseaux optiques.

Habituellement, de tels micro-tubes sont constitués de structures multicouches à base de matériaux thermoplastiques, et sont composés d'une couche intérieure, qui peut être annelée, comprenant du polyéthylène haute densité (HDPE) et un lubrifiant et d'une couche extérieure à base de HDPE, la couche intérieure présentant une épaisseur nettement inférieure à celle de la couche extérieure.

La mise en place de câbles et de micro-tubes nécessite généralement de placer le câble isolé dans le tube une fois que le tube et le câble ont été indépendamment formés, ce qui est une opération longue et délicate, notamment lorsque les câbles et les tubes sont de grande longueur et/ou de faible diamètre.

Il est difficile de former directement le tube autour du câble, car les tubes sont généralement réalisés par extrusion d'un matériau thermoplastique. Or, cette opération nécessite de porter le matériau thermoplastique à une température telle qu'elle conduit au ramollissement du câble le rendant collant, à sa rétractation et même, dans le cas d'un câble optique, à une altération de ses performances optiques.

Dès lors, il n'est possible d'introduire le câble dans le micro-tube qu'une fois que ce dernier a refroidi.

Les documents suivants font partie de l'art antérieur:
WO-A1-02/099491
US 6,500,365
US-A1-2004/0240809
EP-A1-0 785 451
US 4,892,442
EP-A2-00326711

On connaît par le document FR 76 00271 (FR-A1-2 337 620), un procédé de fabrication d'un tube en résine thermoplastique, consistant à extruder le tube directement autour d'un câble défilant. Du fait de l'espace prévu entre les parois du tube en formation et de la vitesse de défilement du câble, celui-ci n'est pas endommagé.

Toutefois, cette solution n'est pas transposable à des micro-tubes, du fait des faibles dimensions de ces derniers.

Le but de l'invention est donc de proposer un procédé permettant de fabriquer un micro-tube directement autour d'au moins un câble, tout en permettant au câble de rester lâche au sein de ce micro-tube.

A cet effet, l'invention concerne un procédé de fabrication d'un microtube comprenant un câble, en particulier un câble optique, comportant les étapes selon la revendication 1 ou la revendication 2.

Selon le procédé de l'invention, on commence par extruder une première couche tubulaire aussi fine que possible autour du câble.

Le tube ainsi obtenu subit aussitôt un refroidissement.

La faible épaisseur de la couche extrudée, qui limite l'apport de chaleur et permet son refroidissement rapide, et de l'étape de refroidissement suivant immédiatement l'extrusion, permettent d'éviter que le câble ne soit endommagé.

Après refroidissement de la fine couche extrudée, on peut procéder à l'extrusion d'une deuxième couche plus épaisse directement sur la couche fine et finir de former le tube.

Cette opération n'altère pas le câble car celui-ci est protégé par la première couche fine.

On obtient ainsi un micro-tube formé directement autour d'un câble.

Selon un mode de réalisation de l'invention, la deuxième étape d'extrusion est suivie d'une deuxième étape de refroidissement.

Etant donné l'épaisseur de la couche déposée lors de la deuxième étape d'extrusion, cette deuxième étape de refroidissement est plus longue que la première étape de refroidissement.

De préférence, la première comme la deuxième étape de refroidissement sont réalisées par refroidissement à circulation d'eau, dans des réservoirs à une température comprise de 7 à 15 °C.

Selon un mode de réalisation de l'invention, la première étape d'extrusion comporte, en même temps que l'extrusion de la couche en un matériau thermoplastique, l'extrusion d'une couche de lubrification, ladite couche de lubrification étant disposée de manière à se trouver en regard dudit câble.

Cette couche de lubrification permet de faciliter le remplacement du câble, lors des opérations de retrait du câble initial et d'introduction d'un nouveau câble.

De préférence, la couche de lubrification présente une épaisseur comprise entre 0,03 et 0,07 mm, par exemple de l'ordre de 0,05 mm.

Ladite couche de lubrification peut par exemple être réalisée à base d'un matériau thermoplastique tel que du polyéthylène, en particulier un HDPE, et d'un lubrifiant.

Selon un mode de réalisation de l'invention, le procédé peut également comporter une étape de lubrification du câble, préalablement à la première étape d'extrusion.

De préférence, l'extrusion de la première couche tubulaire en un matériau thermoplastique est réalisée de façon à ce que celle-ci présente un diamètre intérieur compris entre 3 et 10 mm.

On choisira le diamètre intérieur de cette première couche tubulaire, qui sera le diamètre intérieur du micro-tube fini, de façon à ce qu'il soit suffisamment grand pour que le micro-tube puisse contenir le câble de façon lâche.

Cette première couche tubulaire en un matériau thermoplastique est réalisée de préférence à base d'un polyéthylène, en particulier de HDPE, ou de polypropylène.

La deuxième couche tubulaire en un matériau thermoplastique présente elle un diamètre extérieur de préférence compris entre 6 et 16 mm.

Elle est de préférence réalisée à base de polyéthylène, en particulier de HDPE.

De préférence, le câble présente un revêtement en polyamide ou en polyéthylène.

L'invention va maintenant être décrite plus en détail, à l'aide d'un exemple donné à titre illustratif et représenté dans les figures annexées dans lesquelles :
- la figure 1 une représentation schématique de la mise en oeuvre du procédé de fabrication d'un micro-tube selon l'invention,
- la figure 2 est une vue en coupe du micro-tube en cours de formation, à la sortie de la première étape d'extrusion, et
- la figure 3 est une vue en coupe du micro-tube contenant un câble obtenu selon le procédé de l'invention.

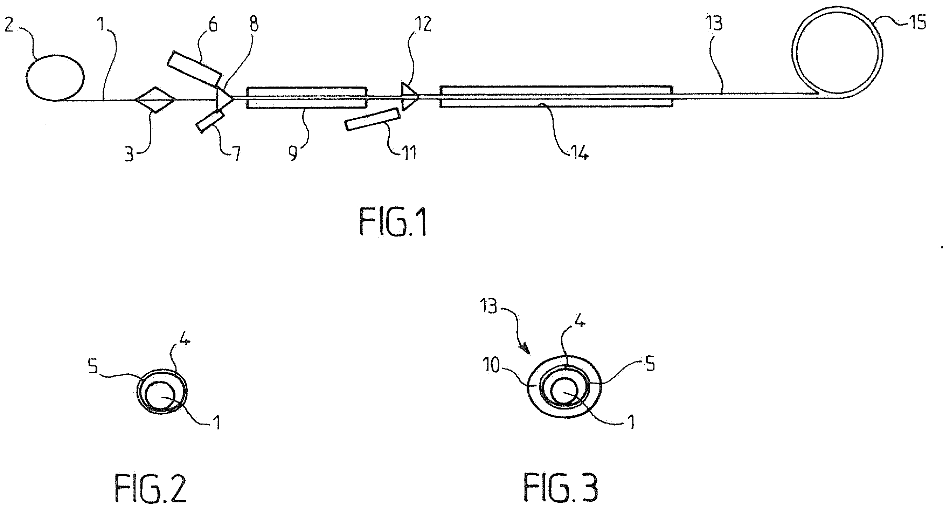

Comme indiqué dans la figure 1, le procédé selon l'invention peut commencer par une étape classique consistant à dérouler un câble 1 préalablement disposé sur une bobine 2.

Le câble 1 peut par exemple être un câble optique d'un diamètre de 1, 5 mm, constitué de fibres optiques entourées par une gaine protectrice en polyamide ou en polyéthylène.

Le câble 1 est alors entraîné vers un dispositif d'enduction 3 d'une matière lubrifiante, par exemple du talc ou du silicone.

Le câble 1 subit ensuite une première étape d'extrusion à la fois d'une couche de lubrification 5 et d'une couche thermoplastique en HDPE 4.

Cette étape est réalisée par coextrusion, les deux couches 4, 5 étant simultanément extrudées à une température de 250° chacune à partir d'une extrudeuse 6, 7 puis réunies au moment de passer à travers une filière 8, de façon à ce que la couche de lubrification 5 soit disposée en regard du câble 1.

A la suite de cette première étape d'extrusion, le câble 1 entouré des couches 4 et 5 passe immédiatement dans un dispositif de refroidissement 9, ici des réservoirs à eau présentant une température comprise entre 7 et 15°C.

Comme on peut le voir à la figure 2, les couches coextrudées 4 et 5 sont très fines, l'épaisseur totale étant de l'ordre de 0,55 mm, de sorte qu'elles refroidissent très vite et n'endommagent pas le câble 1. De plus la coextrusion est réalisée de manière que le diamètre intérieur des couches 4 et 5 soit supérieur au diamètre du câble 1, si bien que celui-ci reste lâche à l'intérieur de la structure tubulaire formée par les couches 4 et 5.

On procède alors la deuxième étape d'extrusion, en extrudant la couche extérieure du micro-tube, par exemple une couche en HDPE 10 au moyen d'une extrudeuse 11 et d'une filière 12 .

Comme on peut le voir à la figure 3, l'épaisseur de la couche extérieure, de l'ordre de 2 mm, est bien supérieure à celle de l'ensemble formé par les couches 4 et 5. C'est cette couche qui apportera la solidité au micro-tube.

A l'issue de la deuxième étape d'extrusion, on a formé un micro-tube 13 autour du câble 1.

La deuxième étape d'extrusion est suivie d'une étape de refroidissement, similaire à la première étape de refroidissement, dans des réservoirs à eau 14, mais pour une durée supérieure à celle de la première étape de refroidissement, du fait de l'épaisseur de la couche extrudée.

Enfin, le micro-tube 13 contenant le câble 1 est enroulé autour d'une bobine grâce à un dispositif d'enroulage 15 et peut être ainsi stocké en vue d'une utilisation future.

Le dispositif d'enroulage tirant le micro-tube 13 contenant le câble vers une extrémité et les extrudeuses 6, 7 et 11 les poussant dans la même direction permettent d'entraîner le câble et le micro-tube en formation.

## Revendications

1. Procédé de fabrication d'un micro-tube (13) muni d'au moins un câble (1) comportant les étapes suivantes :
- une première étape d'extrusion autour dudit câble (1) défilant d'une première couche tubulaire (4) en un matériau thermoplastique, ladite première couche tubulaire (4) présentant une épaisseur comprise entre 0,3 et 0,7 mm, l'extrusion de la première couche tubulaire (4) étant réalisée de façon à ce que celle-ci présente un diamètre intérieur suffisamment grand pour que ladite première couche tubulaire (4), et ainsi le micro-tube (13) fini, puisse contenir le câble (1) de façon lâche,
- une première étape de refroidissement, et
- une deuxième étape d'extrusion d'une deuxième couche tubulaire (10) en un matériau thermoplastique, ladite deuxième couche tubulaire (10) présentant une épaisseur comprise entre 1 et 2,5 mm,
**caractérisé en ce que**
la première étape d'extrusion comporte, en même temps que l'extrusion de la première couche tubulaire (4) en un matériau thermoplastique, l'extrusion d'une couche de lubrification (5), ladite couche de lubrification (5) étant disposée de manière à se trouver en regard dudit câble (1).

2. Procédé de fabrication d'un micro-tube (13) muni d'au moins un câble (1) comportant les étapes suivantes :
- une première étape d'extrusion autour dudit câble (1) défilant d'une première couche tubulaire (4) en un matériau thermoplastique, ladite première couche tubulaire (4) présentant une épaisseur comprise entre 0,3 et 0,7 mm, l'extrusion de la première couche tubulaire (4) étant réalisée de façon à ce que celle-ci présente un diamètre intérieur suffisament grand pour que ladite première couche tubulaire (4), et ainsi le micro-tube (13) fini, puisse contenir le câble (1) de façon lâche,
- une première étape de refroidissement, et
- une deuxième étape d'extrusion d'une deuxième couche tubulaire (10) en un matériau thermoplastique, ladite deuxième couche tubulaire (10) présentant une épaisseur comprise entre 1 et 2,5 mm,
**caractérisé en ce que**
le procédé comporte une etape de lubrification du cable, préalablement à la premiere etape d'extrusion.

3. Procédé selon la revendication 1 ou 2, **caractérisé en ce que** la deuxième étape d'extrusion est suivie d'une deuxième étape de refroidissement.

4. Procédé selon la revendication 1, **caractérisé en ce que** ladite couche de lubrification (5) comporte un matériau thermoplastique et un lubrifiant.

5. Procédé selon l'une quelconque des revendications 1 et 4, **caractérisé en ce que** ladite couche de lubrification (5) présente une épaisseur comprise entre 0,03 et 0,07 mm.

6. Procédé selon l'une quelconque des revendications 1 à 5, **caractérisé par le fait que** la première couche tubulaire (4) en un matériau thermoplastique formée lors de la première étape d'extrusion comporte un polyéthylène, en particulier du polyéthylène haute densité, ou du polypropylène.

7. Procédé selon l'une quelconque des revendications 1 à 6, **caractérisé en ce que** ladite première couche tubulaire (4) en un matériau thermoplastique présente un diamètre intérieur compris entre 3 et 10 mm.

8. Procédé selon l'une quelconque des revendications 1 à 7, **caractérisé en ce que** la deuxième couche tubulaire (10) en un matériau thermoplastique formée lors de la deuxième étape d'extrusion comporte un polyéthylène, en particulier du polyéthylène haute densité.

9. Procédé selon l'une quelconque des revendications 1 à 8, **caractérisé en ce que** ladite deuxième couche tubulaire (10) en un matériau thermoplastique présente un diamètre extérieur compris entre 6 et 16 mm.

10. Procédé selon l'une quelconque des revendications 1 a 9, **caractérisé en ce que** ledit câble (1) présente un revêtement en polyamide ou en polyéthylène.

## Patentansprüche

1. Herstellungsverfahren eines Mikrorohrs (13), das mit mindestens einem Kabel (1) versehen ist, einschließend die folgenden Schritte:
- einen ersten Extrusionsschritt um das Kabel (1), das eine erste rohrförmige Schicht (4) aus einem thermoplastischen Material durchläuft, wobei die erste rohrförmige Schicht (4) eine Dicke zwischen 0,3 und 0,7 mm aufweist, wobei die Extrusion der ersten rohrförmigen Schicht (4) so durchgeführt wird, dass diese einen inneren Durchmesser aufweist, der groß genug ist, damit die erste rohrförmige Schicht (4), und somit das fertige Mikrorohr (13), das Kabel (1) lose enthalten kann,
- einen ersten Kühlschritt, und
- einen zweiten Extrusionsschritt einer zweiten rohrförmigen Schicht (10) aus einem thermoplastischen Material, wobei die zweite rohrförmige Schicht (10) eine Dicke zwischen 1 und 2,5 mm aufweist,
**dadurch gekennzeichnet, dass**
der erste Extrusionsschritt gleichzeitig mit der Extrusion der ersten rohrförmigen Schicht (4) aus einem thermoplastischen Material die Extrusion einer Schmierschicht (5) einschließt, wobei die Schmierschicht (5) so angeordnet ist, dass sie dem Kabel (1) gegenüberliegt.

2. Herstellungsverfahren eines Mikrorohrs (13), das mit mindestens einem Kabel (1) versehen ist, einschließend die folgenden Schritte:
- einen ersten Extrusionsschritt um das Kabel (1), das eine erste rohrförmige Schicht (4) aus einem thermoplastischen Material durchläuft, wobei die erste rohrförmige Schicht (4) eine Dicke zwischen 0,3 und 0,7 mm aufweist, wobei die Extrusion der ersten rohrförmigen Schicht (4) so durchgeführt wird, dass diese einen inneren Durchmesser aufweist, der groß genug ist, damit die erste rohrförmige Schicht (4), und somit das fertige Mikrorohr (13), das Kabel (1) lose enthalten kann,
- einen ersten Kühlschritt, und
- einen zweiten Extrusionsschritt einer zweiten rohrförmigen Schicht (10) aus einem thermoplastischen Material, wobei die zweite rohrförmige Schicht (10) eine Dicke zwischen 1 und 2,5 mm aufweist,
**dadurch gekennzeichnet, dass**
das Verfahren vor dem ersten Extrusionsschritt einen Schmierschritt des Kabels einschließt.

3. Verfahren nach Anspruch 1 oder 2, **dadurch gekennzeichnet, dass** dem zweiten Extrusionsschritt ein zweiter Kühlschritt folgt.

4. Verfahren nach Anspruch 1, **dadurch gekennzeichnet, dass** die Schmierschicht (5) ein thermoplastisches Material und ein Schmiermittel einschließt.

5. Verfahren nach einem der Ansprüche 1 und 4, **dadurch gekennzeichnet, dass** die Schmierschicht (5) eine Dicke zwischen 0,03 und 0,07 mm aufweist.

6. Verfahren nach einem der Ansprüche 1 bis 5, durch die Tatsache gekennzeichnet, dass die erste rohrförmige Schicht (4) aus einem thermoplastischen Material, die während des ersten Extrusionsschritts gebildet wird, ein Polyethylen, insbesondere Polyethylen hoher Dichte, oder Polypropylen einschließt.

7. Verfahren nach einem der Ansprüche 1 bis 6, **dadurch gekennzeichnet, dass** die erste rohrförmige Schicht (4) aus einem thermoplastischen Material einen inneren Durchmesser zwischen 3 und 10 mm aufweist.

8. Verfahren nach einem der Ansprüche 1 bis 7, **dadurch gekennzeichnet, dass** die zweite rohrförmige Schicht (10) aus einem thermoplastischen Material, die während des zweiten Extrusionsschritts gebildet wird, ein Polyethylen, insbesondere Polyethylen hoher Dichte, einschließt.

9. Verfahren nach einem der Ansprüche 1 bis 8, **dadurch gekennzeichnet, dass** die zweite rohrförmige Schicht (10) aus einem thermoplastischen Material einen äußeren Durchmesser zwischen 6 und 16 mm aufweist.

10. Verfahren nach einem der Ansprüche 1 bis 9, **dadurch gekennzeichnet, dass** das Kabel (1) eine Ummantelung aus Polyamid oder aus Polyethylen aufweist.

## Claims

1. Method of manufacturing a microtube (13) provided with at least one cable (1), comprising the following steps:
- a first step of extruding around said cable (1), while in relative motion, a first tubular layer (4) of a thermoplastic material, said first tubular layer (4) being of a thickness of between 0.3 and 0.7 mm, and the extruding of the first tubular layer (4) being performed in such a way that it is of an inside diameter sufficiently large for said first tubular layer (4), and hence the finished microtube (13), to be able to contain the cable (1) loosely,
- a first cooling step, and
- a second step of extruding a second tubular layer (10) of a thermoplastic material, said second tubular layer (10) being of a thickness of between 1 and 2.5 mm,
**characterised in that**
the first extruding step comprises, at the same time as the extruding of the first tubular layer (4) of a thermoplastic material, the extruding of a lubricating layer (5), said lubricating layer (5) being arranged in such a way as to be situated opposite said cable (1).

2. Method of manufacturing a microtube (13) provided with at least one cable (1), comprising the following steps:
- a first step of extruding around said cable (1), while in relative motion, a first tubular layer (4) of a thermoplastic material, said first tubular layer (4) being of a thickness of between 0.3 et 0.7 mm, the extruding of the first tubular layer (4) being performed in such a way that it is of an inside diameter sufficiently large for said first tubular layer (4), and hence the finished microtube (13), to be able to contain the cable (1) loosely,
- a first cooling step, and
- a second step of extruding a second tubular layer (10) of a thermoplastic material, said second tubular layer (10) being of a thickness of between 1 et 2.5 mm,
**characterised in that** the method comprises a step of lubricating the cable, prior to the first extruding step.

3. Method according to claim 1 or 2, **characterised in that** the second extruding step is followed by a second cooling step.

4. Method according to claim 1, **characterised in that** said lubricating layer (5) comprises a thermoplastic material and a lubricant.

5. Method according to either of claims 1 and 4, **characterised in that** said lubricating layer (5) is of a thickness of between 0.03 and 0.07 mm.

6. Method according to any one of claims 1 to 5, **characterised by** the fact that the first tubular layer (4) of a thermoplastic material which is formed at the time of the first extruding step comprises a polyethylene, and in particular high-density polyethylene, or polypropylene.

7. Method according to any one of claims 1 to 6, **characterised in that** said first tubular layer (4) of a thermoplastic material is of an inside diameter of between 3 et 10 mm.

8. Method according to any one of claims 1 to 7, **characterised in that** the second tubular layer (10) of a thermoplastic material which is formed at the time of the second extruding step comprises a polyethylene, and in particular high-density polyethylene.

9. Method according to any one of claims 1 to 8, **characterised in that** said second tubular layer (10) of a thermoplastic material is of an outside diameter of between 6 and 16 mm.

10. Method according to any one of claims 1 to 9, **characterised in that** said cable (1) has a covering of polyamide or of polyethylene.
